# EUROPEAN PATENT APPLICATION

(11) **EP 0 544 509 A2**
(43) Date of publication of application: **02.06.1993**
(21) Application number: 92310758.5
(22) Date of filing: 25.11.1992
(51) Int. Cl.: G06F 15/72, G06F 3/033

(54) **Photographic filter metaphor for control of digital image processing software**

(30) Priority: 27.11.1991 US 799261
(71) Applicant: XEROX CORPORATION, Rochester New York 14644 (US)
(72) Inventor: Pandolfi, Thomas A., Pacific Grove, California 93950 (US)
(74) Representative: Hill, Cecilia Ann

(57) **Abstract**

An image processing system uses a photographic filter metaphor for control of digital image processing software. An image is manipulated in a series of successive operations which are stored independently. After a series of operations, the original image and each successive operation can be retrieved without reexecuting the series of operations. A user-friendly interface allows a user to select a preprogrammed filter effect (32) or create a custom filter effect from the options presented.

## Description

The present invention relates to digital image processing and, more particularly, to an interface which allows a user to continuously operate on and selectively retrieve an image throughout a series of modifications.

Digital image processing is designed to manipulate images, scanned in directly or imported from software or memory, which are displayed on a display device such as the screen of a personal computer. There are several tools known for manipulating images including a "paintbrush" and a "filter".

Digital image processing is typically used-by selecting an area of an image to be modified and selecting a function, such as a filter function, which executes the operation. The user may then observe the results and decide to either continue or undo the previous step. The next area that needs modification is then selected, and the steps are repeated. With this type of processing, however, the user is locked into a specific operation and area of the image. Also, the user must decide after each function whether the desired effect was attained without seeing the final result. Further, the effects of typical image manipulating functions are either on or off and not continuously adjustable. Also, the edges of the selected areas tend to be abrupt rather than feathered.

An example of a paintbrush image editing program is Gray F/X by Xerox. The program uses a "paintbrush", which comes in several different sizes, to touch up an image or draw something into the picture. The program includes basic image enhancement tools such as changing brightness and contrast, sharpening or softening edges, redistributing gray values, copying and pasting parts of a picture, zooming in and out, rotating, slanting and warping part of an image.

U.S. Patent No. 4,751,503 to Kermisch also uses a paintbrush or "airbrush" to touch up an image. Kermisch's airbrush is manipulated by an operator viewing a CRT display or similar display to make corrections to an electrical raster image during real time interaction between the operator and the displayed image. The airbrush includes a pointer device that is manipulated by the viewer to touch-up the continuous tone image. The pointer can be activated by a mouse, which is well known in the computer art. In Kermisch, the image on display is refreshed from the image stored in memory at periodic intervals, and whenever a change is caused in memory by enhancing contrast, the displayed image will show these changes. Each time the airbrush is activated, the pixels in the area defined by the cursor are changed.

Both the Kermisch process and Gray F/X operate on the actual image. Therefore, with each operation, the image is modified. This restricts the user from continuously modifying an image and subsequently displaying previous modifications to the image. In other words, if the user operates on an image five times for example, it is not possible, after the fifth operation, to retrieve the second modification. By changing the actual image during each operation, the user cannot compare previous images to the final product and cannot correct mistakes made early in the series of operations.

An example of using a filter in image processing is a system called Maclmage available from Xerox. To use a filter on a portion of an image with the current version of Maclmage the operator must first select the desired area to be affected. In Maclmage, this is a rectangle. Next, the desired filter is selected. Filters are available that will lighten, darken, intensify dark areas or reduce light areas. At this point, the image is changed according to the filter specifications. The operator then decides if the desired result was achieved or if the effect of the filter should be removed. If the operator continues to process the image, the effect of the filter is "burned" into the image and cannot be removed later.

U.S. Patent No. 4,800,379 to Yeomans discloses an electronic image display having a movable magnification area. The outline of the area selected to be modified can be moved around the image displayed on the monitor, and a magnification process can be performed within this area. The degree of magnification can be reduced at the edges of the selected area.

U.S. Patent No. 4,790,028 to Ramage discloses a method and apparatus for magnifying a selected portion of an image while simultaneously compressing the remaining image so that no material is lost from the total viewing area. A transition area is provided around the magnified area to reduce distortion at the boundaries between the area of constant magnification and the surrounding area.

U.S. Patent Nos. 4,791,581 and 4,885,702 to Ohba disclose a method and apparatus for electronically generating data representative of curved surfaces. The surface deformation of the selected area is interactively controlled by the operator.

The known image processing devices do not provide systems which are continuously variable. There is a need for a user-friendly system which allows for continuously variable operations on an image and which does not permanently alter the image and its subsequent modifications.

The present invention provides an interface for continuously operating on an image displayed on a display device comprising a mechanism for displaying the image on the display device, a mechanism for selectively, successively modifying a portion of the image, a mechanism for storing the original image and each modification of the image and a mechanism for retrieving the original image and each separate successive modification of the image.

The mechanism for selectively, successively modifying a portion of the image may comprise a filter which overlays the portion of the image to be modified. The filter may be a gamma filter which modifies contrast; or a halftone filter which modifies brightness; or a convolution filter which modifies sharpness; or a rotation filter which rotates a portion of the image; or a scaling filter; or a skewing filter; or an error diffusion filter; or a mixing filter having a plurality of source images. When the filter is a rotation filter, it may include border fade out.

The present invention also provides a method for operating on images in a display device comprising an interactive user interface, the method comprising the steps of displaying an image on the display device, selecting a filter for overlaying on a portion of the image, modifying the portion of the image overlayed by the filter while preserving the image as it appeared before the modification, displaying the modified filtered portion of the image and the remaining portion of the image and retrieving the image as it appeared before the modification.

The step of modifying the image may comprise modifying the contrast of a portion of the image; or modifying the brightness of a portion of the image; or modifying the sharpness of a portion of the image; or rotating a portion of the image. The step of rotating a portion of the image may include blending the border of the rotated portion with the remaining displayed image.

By way of example only, a system and method in accordance with the present invention will be described with reference to the accompanying drawings, in which:
Fig. 1 is a schematic diagram of an image processing filter system in accordance with the present invention; and
Fig. 2 is a graphic representation of the user interface as it would appear on a display device with Figures 2a-g representing the different types of filters available in the system.

The interface in a system in accordance with the present invention can be analogized to the surface of a piece paper. Images can be "placed" on the surface like photographs in a scrapbook. "Filters" can be placed over the images like pieces of glass over a photograph. Thus, the user can see the results of the image processing immediately. The filter can be moved or resized at any time, and the function of the filter can be changed and even softened at the edges so the filtered and unfiltered areas blend smoothly. Multiple filters can be active over the image and over each other. Thus, although the visual display of the underlying image is modified by the filters, the underlying image and each successive modification has not been changed. Referring to the analogy of the photograph beneath pieces of glass, a combination of pieces glass may be laid over the photograph and a final result obtained and then the photograph removed from beneath the glass and a new photograph inserted. Thus, the effect ofthe overlying glass has been.saved while the actual image has been replaced. This is possible since the original photograph, or image, was not altered during the modifications, or filterings. The filter function can be changed or removed at any time. The effect of the filter function can be intensified or reduced at any time. The shape and position of the filter outline can be changed at any time.

Various image processing effects described below are described in Beyond Photography by Gerard J. Holzmann, published by Prentice Hall:New Jersey, 1988, to which reference may be made for further information if required.

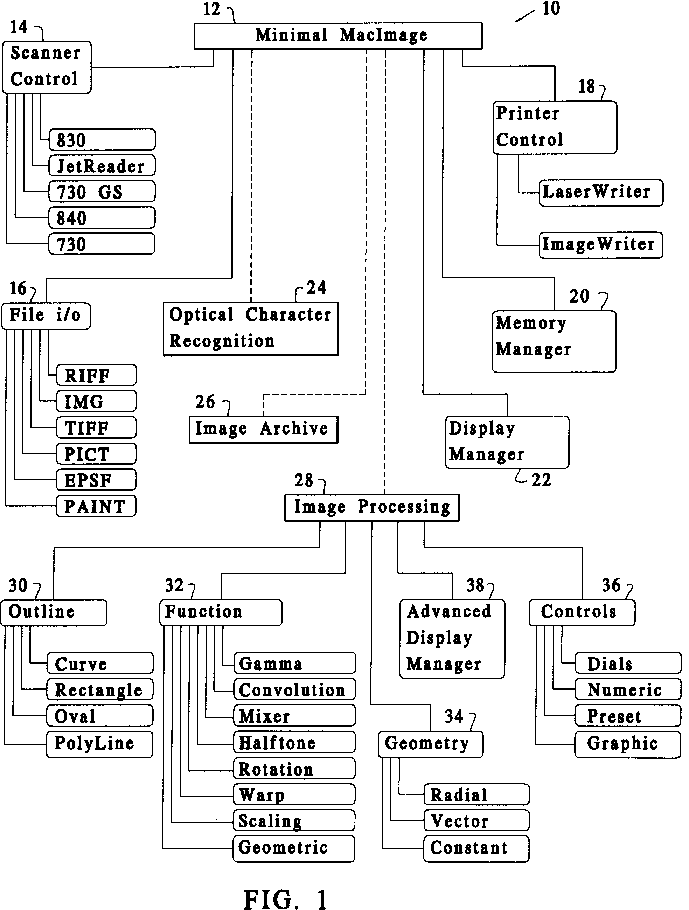

Referring to Figure 1, a diagram of an image processing filter system 10 according to the present invention is shown. The filter system 10 is built from a basic Maclmage shell 12 which is a known digital image processing system available from Xerox Corporation as discussed above. Filter system 10 uses a Maclmage 3.0 shell 12 to support a scanner control 14, a file input/output 16 and a printer control 18 as shown in Figure 1. The Maclmage shell 12 also includes a memory manager 20 and a display manager 22. The above aspects of Maclmage are known and therefore will not be described in detail.

The filter system 10 adds several features to Maclmage. Specifically, filter system 10 includes an optical character recognition feature 24, an image archive 26 and image processing feature 28, as shown connected to the Maclmage shell by dotted lines in Figure 1.

Optical character recognition feature 24 includes the ability to convert an image into text.

Image archive 26 includes the ability to catalog, compress and store images for archival purposes. For retrieval there is the ability to search, retrieve and decompress images.

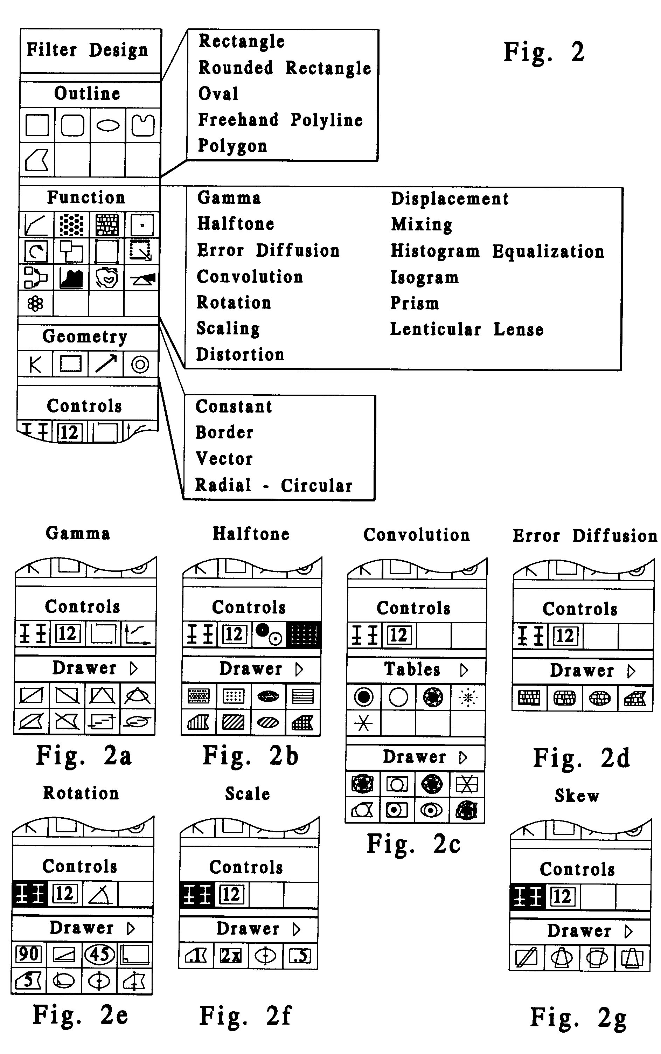

Image processing feature 28 allows the user to select or create a filter to operate on the image. Image processing 28 includes outline option 30, function option 32, geometry option 34, and control option 36. Also included is an advanced display manager 38 which allows viewing of portions of an image by efficiently storing, processing and moving data from disk storage to screen display. A sample menu displaying the features of the image processing 28 is shown in Figure 2. As described below, the selected filter function influences the control options. Thus, for each selected filter function, the optional controls change, and optional drawers and tables are added.

The outline feature 30 of the image processing 28 allows selection of the shape of the outline of the filter. For example, the outline may be a curve, a rectangle, an oval or a polyline. The function feature 32 of image processing 28 allows the type of filter to be selected. For example, a gamma, convolution, mixer, halftone, rotation, warp, scaling or geometric filter may be chosen. The geometry feature 34 of image processing 28 allows the effect of the filter to be selected. For example, a radial effect, a vector effect or a constant effect of the chosen filter may be selected. The control feature 36 of image processing 28 provides the type of control function to be used with the filter. For example, dials, numeric, preset or graphic controls may be chosen. The control selection is dependent on the selected function option, that is, the type of filter, as shown in Figure 2. This is discussed in more detail with respect to a specific type of filter below.

In operation, the filter system 10 uses a work surface displayed on the screen of the display device. The work surface is created by using a metaphor of an easel with a piece of paper thereon. This metaphor is similar to that used in a program called Page Maker created by Aldus Corporation. The image is displayed on the "easel" by reading a file off a disk or scanning an image from a scanner. The image can be positioned or scaled using a mouse. Multiple images can be placed on the easel, similar to the way photographs may be placed on a table. A mat is similar to an image and can be imported or exported in the same format as images or can be generated by a program. Mats are usually solid patterns, solid sheets of gray or simple geometric shapes. Images and mats occupy the "image layer" which is closest to the "easel".

Next, a filter is selected to operate on the image. Standard filters may be "pulled" from a "filter drawer" or custom filters can be created with a separate filter maker. Filters are used to modify or mix images and mats. Filters occupy the layer over the images and mats and look as though they are lying on top of the images. Filters can be moved, resized, reshaped and their effect can be modified at any time since the effect of the filters is not burned in when the file is saved. Image data is passed through the filters for viewing on the screen, printing and exporting to other file formats. The filter system 10 retains or stores the images and filters separately.

The file format can store any number of images (and/or Mats) with any number of filters. A sample outline ofthe file format follows:
Easel size: 11 x 14
Paper size: 8 x 10
Number of images: 2
Data for image 1
Image 1 position and size
Image 1 type and format
Image 1 data
Data for image 2
Image 2 position and size
Image 2 type and format
Image 2 data
Number of filters: 3
Data for Filter 1
Filter 1 position and size
Filter 1 type and format
Filter 1 data
Data for Filter 2
Filter 2 position and size
Filter 2 type and format
Filter 2 data
Data for Filter 3
Filter 3 position and size
Filter 3 type and format
Filter 3 data
End of file.

Filters are available in four shapes: rectangle, oval, polyline (including freehand and polygon) and bezier curves. The filter system 10 includes many filter types including gamma, convolution, halftone, pixel rearrangement and mixing. A gamma filter effect modifies the contrast of an image, such as lightening or darkening certain portions of the image. A convolution effect enhances the image by sharpening, blurring, outlining, or edge enhancing a portion of the image. A halftone filter changes the brightness based on a repeating cell. The effect of pixel rearrangement can rotate, skew, or distort an image. Mixing filters allow two images to be mixed by geometric patterns or by controlling a third image or mat. Other types of effects are also available including error diffusion which involves a four-way spread of the image or lenticular lens filters which repeat pixel rearrangement to dissolve, speckle or blur an image.

Filters appear with handles and controls when selected. Such controls allow the geometry and effect of the image to be manipulated. For example, the effect of the filter may be constant or may be adjusted to fade at the borders. Also, the intensity or degree of the filter effect can be controlled as is discussed with reference to specific examples below.

In using the filter system 10, multiple filters may be "stacked" over an image to achieve the desired effect without changing the original image or deleting the previous modifications. A graphic window, which depicts a side view, presents the current stacking of images and filters. This feature allows the user to rearrange filters without repeated use of the menu items.

### Gamma Filter

The simplest type of filter is the gamma filter. The gamma filter works on one pixel at a time. Based on the gamma filter's functions, each pixel is replaced according to the value of the function. Gamma filters can lighten, darken, change contrast, posterize, solarize, colorize and perform other similar effects.

Referring to Figures 2 and 2a, a gamma filter may either be chosen from the drawer of filters, which includes filters previously created and saved, or custom designed.

To create a triangular gamma filter, for example, the appropriate icon from each section of the filter design pallet illustrated in Figure 2 must be selected. First, an outline option from the menu must be selected. To draw a triangle, a user would select the polygon from the outline group, shown on the far left of the second row of the outline section. Next, the gamma icon would be selected from the function group. As shown in Fig. 2, the gamma function is displayed in the top lefthand corner of the function section. To soften the effects of the gamma filter near the border of the triangle, the border icon from the geometry section would be selected. This icon is displayed at the second from the left of the geometry section. Finally, a control icon for a gamma filter would be selected, such as the linear slide control icon shown at the far left of the control section. Then, the mouse may be moved over the image to draw the triangle. If the placement or shape is incorrect, the filter may be moved or reshaped. For example, a point on the polygon may be eliminated or changed from a sharp corner to a smooth corner. When the triangular shape is finished, the control pallet appears.

The triangle and control pallet float over the image, and the image under the triangle is affected by the settings of the controls in the control pallet. The control pallet may be moved or hidden and contains four slide pots which control the brightness, contrast, gamma and width. The brightness control adds or subtracts a constant from the value of each pixel in the image. The contrast control multiples each pixel value by a constant (this slide pot is nonlinear). The gamma control puts a curve into the transfer function that maintains the black and white levels but modifies the mid-gray range. The width control affects the softness of the filter at the border. At the maximum setting, the filter has its full effect throughout the filter's geometry. At the minimum setting, the filter has little effect at the edges and full effect only at the center.

Alternatively, rather than selecting the border icon in the geometry section, the constant icon (K), the arrow icon or the concentric circles icon could be selected. The constant icon maintains a constant effect of the filter throughout the selected area, and the width control would not appear. The arrow icon replaces the width control with two controls, one for angle and another for the rate of change in that direction. For example, the arrow would allow the left side of the gamma filter to fade. The icon of concentric circles indicates a radial effect, and, as such, the filter would have more effect as the centroid of the filter outline is approached. Unlike border geometry, the linear and radial geometries are not affected by the outline of the filter except that it indicates the end of the filter effect.

A different control selection could also be made. For example, the second icon in the control section of the filter design pallet, represented by the numeric "12" at the far left corner of the control section produces a numeric control pallet.

The third control icon for the gamma filter, moving from left to right across the menu, is a graphic control. In this case, the slide pots move through an L shape. The gamma response is a function that connects the two controls. In addition, a handle at the midpoint of the gamma response allows bending of the gamma response function.

The fourth way to control the gamma filter, shown at the far right of the menu, is a general control influenced by the displayed graph which is drawn to represent the gamma function. This control is similar to the current gamma editor in Maclmage.

The final way to control a gamma filter is to name and save the settings of one of the previous examples in the drawer.

In addition to changing the filter response at any time, the filter type can be changed as long as there is no conflict between types. For example, a filter may be changed from gamma to convolution, but not from gamma to mixer. Likewise, the control pallet can be changed between the various types of controls as easily as a font in a word processor may be changed. Also, the outline can be changed within limits. For example, rectangles and circles are interchangeable, as are polylines and curves.

### Halftone Filter

Halftone filters are created by selecting one of four modes: dot, square, line or cross; then graphically setting the pitch and angle. The icon in the filter section of the filter design menu for the halftone filter is shown in Figure 2 in the second box from the upper left.

After the halftone filter function is selected, a control window will appear on the work surface with four shapes appearing at the top of the control window. One of these four shapes is selected. A repeating pattern of the selected shape appears in the control window. Similar to the gamma filter, the halftone filter includes controls directed to a slide pot or a numeric function. Alternatively, a double shape control icon, shown second from the right in the menu depicted in Figure 2b, can be chosen. With this selection, two shapes will appear in the control window, one being a black shape with a white dot at the center and the other being a white shape with a black dot at the center. The black shape will pivot around the white dot, and the white dot can be moved with a mouse. Moving the shapes closer creates a halftone pattern with closer spacing, and changing the angle between them creates a halftone pattern at any angle.

Shown in the far right of the control menu for the halftone filter is a table icon. When the table is selected as a method of generating the halftone, the user can enter numbers that will be used in the halftone which relate to cell size. As always, the user may also select a preset pattern.

### Convolution Filter

The convolution filter shown in the top righthand block of the filter menu is used to sharpen or blur an image. The exact nature of the filter is dependent on a table of values. Like the gamma and halftone filters, the convolution filter has a geometry option. The geometry option can fade the filter to no effect or to the maximum effect, as the user desires. Similar to the halftone filter, there is a control selection that will fade the filter into the image.

As shown in Figure 2c, the convolution filter provides an additional table menu. These table icons are used to select the exact nature of the convolution filter. Unlike the halftone filter, the convolution table cannot be generated from controls but instead is yet another option below the controls. Examples of factory created convolution tables are those which sharpen, outline or blur the image or apply a 45° star filter or 60° star filter to the image.

As with the gamma filter, the convolution filter can be controlled from presets. These preset filters are chosen from a list by name.

### Rotation Filter

The rotation filter, shown in the lefthand block of the second row in the filter menu, is more complex than the previous filters. This filter actually moves the pixels of the image, and the outline of the filter relates to the shape of the output. The filter effect however is not restricted to the area under the outline and may use other parts of the image.

The rotation filter rotates the image about the centroid of the outline shape. When selecting the constant icon in the geometry section, there is a single control angle. This angle can be controlled by the user with slide pots, with numeric controls or with graphic handles that form an angle.

Because this filter cannot be faded into the remaining image like the gamma filter, the geometry feature has a very different effect. In fact, the geometry feature actually modifies the rotation angle. To illustrate this point, if the image were a regular grid and the rotation filter had a square outline, the output rotated filtered image would fade or modify the rotation to match the remaining image to achieve border fadeout.

The control options for the rotation filter are shown in Fig. 2e and include a slide pot, numeric or graphic angular control.

The specific control selections for the error diffusion filter, scale filter and skew filter are shown respectively in Figures 2d, 2f and 2g. These control selections include the slide pot and a numeric.

Once a filter is either pulled from a drawer or created, the particular filter effect appears on the image. Subsequently, additional filters or alternative effects of the same filter may be applied to the image. However, since the filter system 10 retains the images and filters separately, the original image is not permanently affected by the various operations. Also, each filter is separately stored and therefore may be independently retrieved after subsequent operations on the image. Therefore, a user is not locked into a final result. For example, if the image was magnified, darkened, blurred and then rotated, the user could retrieve the original image or decide to eliminate the magnification and blurring while leaving the darkening and rotation in place. Thus, the filter system 10 provides the user with a wide range of flexibility in manipulating an image.

## Claims

1. An image processing system including an interface for continuously operating on an image displayed on a display device, comprising:
means for displaying an image on the display device;
means (32) for selectively, successively modifying a portion of the image;
means for storing the original image and each modification of the image; and
means for retrieving the original image and each successive modification of the image.

2. A system according to claim 1, wherein said means for selectively, successively modifying a portion of the image comprises a filter (Figs. 2a to 2g) which overlays the portion of the image to be modified.

3. A system according to claim 2, wherein said filter has a variable shape (30).

4. A system according to claim 2 or claim 3, wherein said filter is a gamma filter (Fig. 2a) which modifies contrast; or a halftone filter (Fig. 2b) which modifies brightness; or a convolution filter (Fig. 2c) which modifies sharpness; or a rotation filter (Fig. 2e) which rotates a portion of the image; or a scaling filter (Fig. 2f); or a skewing filter (Fig. 2g); or an error diffusion filter (Fig. 2d); or a mixing filter having a plurality of source images.

5. A system according to claim 2, wherein said means for modifying a portion of the image comprises a plurality of filters used successively on the image.

6. A method for operating on images in a display device comprising an interactive user interface, wherein the method comprises the steps of:
displaying an image on the display device;
selecting a filter for overlaying on a portion of the image;
modifying the portion of the image overlayed by the filter while preserving the image as it appeared before the modification;
displaying the modified filtered portion of the image and the remaining portion of the image; and
retrieving the image as it appeared before the modification.

7. A method according to claim 6, further comprising the step of further modifying the portion of the image overlayed by the filter while preserving the image as it appeared before the further modification.

8. A method according to claim 6, further comprising the step of moving/altering the selected filter and further modifying a portion of the image while preserving the image as it appeared before the further modification.

9. A method according to claim 6, wherein said step of modifying the image includes a plurality of successive modifications.

10. A method according to claim 9, wherein said step of retrieving the image includes retrieving any one of the modified images from the plurality of successively modified images.

11. A method according to any one of claims 6 to 10, wherein said step of selecting a filter comprises selecting a filter from the group of filters consisting of gamma, halftone, convolution, rotation, scaling, skewing and error diffusion.

12. A method according to any one of claims 6 to 10, wherein said step of modifying the image comprises modifying the contrast of a portion of the image; or modifying the brightness of a portion of the image; or modifying the sharpness of a portion of the image; or rotating a portion of the image.
